# EUROPEAN PATENT APPLICATION

(11) **EP 4 531 403 A1**
(43) Date of publication of application: **02.04.2025**
(21) Application number: 24199673.5
(22) Date of filing: 11.09.2024
(51) Int. Cl.: H04N 21/2187, H04N 21/262, H04N 21/2343, H04N 21/435, H04N 21/458, H04N 21/482, H04N 21/6377, H04N 21/658, H04N 21/84, H04N 21/845, H04N 21/4363

(54) **SYSTEMS AND METHODS FOR CUSTOMISING A CONTENT STREAM**

(30) Priority: 28.09.2023 GB 202314910
(71) Applicant: Sony Interactive Entertainment Europe Limited, London W1F 7LP (GB)
(72) Inventor: DOWNEY, Richard Thomas, London, W1F 7LP (GB); GEORGE, Martin Selby, London, W1F 7LP (GB); WALKER, Andrew William, London, W1F 7LP (GB)
(74) Representative: Murgitroyd & Company

(57) **Abstract**

There is provided a method of providing a custom manifest for a content stream to a user electronic device, the method comprising receiving a request for a manifest file, generating a custom manifest, wherein the custom manifest defines a personalised version of the content stream, and sending the custom manifest to the user electronic device. The method further comprises providing an updated custom manifest file based on a received updated request. There is also provided a method of outputting a content stream on a user electronic device, the method comprising sending a request for a manifest file, receiving a custom manifest file, and outputting a personalised version of the content stream as defined in the custom manifest file. The method further comprises sending an updated request for a custom manifest associated with the content stream, and receiving an updated custom manifest.

## Description

### BACKGROUND

The present specification relates to the sending, receipt, and outputting of personalised content streams.

The streaming of content, for example on a TV, games console, computer, or mobile phone, for both educational, work and entertainment purposes is now a part of everyday life for most people. For example, a content stream may be a live sport or music event broadcast, a video game, a conference, or a video from a popular online streamer.

A content stream (or broadcast presentation) can comprise content from a plurality of sources. Each source can provide one or more of audio, video, data, metadata or other content. Thus, a significant amount of information can be contained in a single content stream output to a viewer.

A manifest file is generally used in all types of streamed media broadcast techniques (Dash, Smooth Streaming, HLS, etc.) but the contents of the manifest file is mostly fixed, apart from a sliding window of media segments in the case of a live broadcast.

### SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided a method of providing a custom manifest for a content stream to a user electronic device, the method comprising receiving, at a sender, a request from a user electronic device for a manifest file associated with a content stream, wherein the request comprises client data, generating, based on the client data received, a custom manifest associated with the content stream, wherein the custom manifest defines a personalised version of the content stream, and sending the custom manifest to the user electronic device via a wireless communication channel.

It will be appreciated that the methods described in the present disclosure are computer-implemented methods.

The custom manifest may be referred to as a personalised manifest throughout this disclosure.

The custom manifest may be referred to as a custom manifest file.

The custom manifest may define a plurality of personalised versions of the content stream.

The method may further comprise sending or outputting the personalised version of the content stream defined in the custom manifest.

The custom manifest may be configured dependent on one or more requirements of the user or the user electronic device. The one or more requirements may be detailed or contained in the client data.

The custom manifest may provide a personalised version of the content stream that is adapted or tailored for the user and/or the user electronic device.

The client data may comprise a device specification for the user electronic device. The device specification may define one or more of: device type; audio requirements; visual requirements; data processing capabilities; display screen size; and/or wireless communication channel quality.

The client data may comprise device information identifying a plurality of user electronic devices, the plurality of user electronic devices including the user electronic device.

Optionally wherein each of the plurality of user electronic devices are associated with the user (i.e. the same user).

Optionally, the method further comprises generating a respective custom manifest for each of the plurality of user electronic devices.

Optionally, sending the custom manifest to the user electronic device comprises sending the respective custom manifest for the user electronic device from the plurality of custom manifests generated.

Optionally, sending the custom manifest further comprises sending the custom manifest to a first user electronic device of the plurality of user electronic devices.

The method may further comprise processing the custom manifest at the first user electronic device to obtain the personalised version of the content stream.

The method may further comprise sending, via a wireless communication channel, the personalised version of the content stream to a second user electronic device of the plurality of user electronic devices. Thus, a first user electronic device may decode the personalised version of the content stream, and then provide the personalised version of the content stream to a second user electronic device. This may be advantageous if the first user electronic device has a greater processing capability compared to the second user electronic device.

Optionally, device information provided in the client data may comprise device specifications for one or more of the plurality of user electronic devices.

The device specification(s) may include device model number/names; display screen resolution; display refresh rate; device processor information; display brightness and HDR capability; device video format information; and device audio capability. The device specifications are not limited to the above non-exhaustive list.

Optionally, the client data further comprises at least one setting specified by the user or by the user electronic device.

The client data may include an indication of the status of the two or more user electronic devices of the plurality of user electronic devices. The indication of the status may provide an indication as to whether or not each user electronic device is turned on, or is in an active state, at the time of sending the request. The indication of the status may provide an indication of one or more properties of the device at the time of sending the request (e.g. the current processing power, available memory, battery power, etc).

The at least one setting may include a maximum duration for the personalised version of the content stream.

Optionally, the method further comprises receiving, by the sender, an update to the client data The method may comprise updating the custom manifest based on the received update to the client data.

Optionally, the method further comprises sending the updated custom manifest to the user electronic device, wherein the updated custom manifest defines an updated personalised version of the content stream.

Optionally, sending, to the user electronic device, the updated custom manifest comprises sending the differences between the updated custom manifest and the custom manifest. Thus, this step may comprise sending only the changes to the custom manifest since the last time the manifest was sent, rather than sending the complete updated manifest.

Optionally, sending the updated personalised manifest comprises sending the complete updated personalised manifest to the user electronic device.

Optionally, the client data comprises device information identifying a plurality of user electronic devices, the plurality of user electronic devices including the user electronic device, and the update to the client data comprises a request to provide the content stream to a second user electronic device of the plurality of user electronic devices.

According to a second aspect of the present disclosure, there is provided a method of outputting a content stream on a user electronic device, the user electronic device comprising a display screen, the method comprising sending, from a user electronic device to a sender, a request for a manifest file associated with a content stream, receiving, from the sender, a custom manifest associated with the content stream via a wireless communication channel, wherein the custom manifest defines a personalised version of the content stream, processing the personalised manifest to obtain information related to the content stream, retrieving components of the content stream based on the personalised manifest and outputting the content stream on the user electronic device.

The method may further include processing the custom personalised manifest to obtain information related to the content stream, and/or retrieving components of the content stream based on the custom manifest.

Optionally, the personalised version of the content stream is unique to the user electronic device.

The custom manifest may be configured dependent on one or more requirements of the user or the user electronic device. The one or more requirements may be detailed or contained in the client data.

The custom manifest may provide a personalised version of the content stream that is adapted or tailored for the user and/or the user electronic device.

Optionally, the sent request comprises or is accompanied by the client data.

Optionally, the client data comprises device information identifying a plurality of user electronic devices, the plurality of user electronic devices including the user electronic device.

Optionally wherein each of the plurality of user electronic devices are associated with the user (i.e. the same user).

Optionally, the method further comprises sending an updated request for a custom manifest associated with the content stream, the updated request indicating that the user is using a second user electronic device of the plurality of user electronic devices

Optionally, the method further comprises receiving, from the sender, an updated custom manifest for the second user electronic device based on the updated request. Thus, the updated custom manifest is tailored or adapted to the second user electronic device.

Optionally, the method further comprises receiving, from the sender, a collection of custom manifests including a respective custom manifest for each of the plurality of user electronic devices, and wherein the second user electronic device selects its respective custom manifest from the collection.

Optionally, the sent request comprises at least one setting specified by the user or the user electronic device.

Optionally, the updated custom manifest is based on the client data associated with the second user electronic device and defines an alternative personalised version of the content stream. The method may further comprise outputting the alternative personalised version of the content stream on the second user electronic device.

According to a third aspect of the present disclosure, there is provided a sender electronic device comprising a processor, and memory including executable instructions that, as a result of execution by the processor, cause the sender electronic device to perform the computer-implemented method of any embodiment or example of the first aspect of the disclosure.

According to a fourth aspect of the present disclosure, there is provided user electronic device, comprising a display screen, a processor and memory including executable instructions that, as a result of execution by the processor, cause the user electronic device to perform the computer-implemented method of any example or embodiment of the second aspect of this disclosure.

The sender electronic device may be a mobile phone, a tablet computer, a laptop, a desktop computer.

### BRIEF DESCRIPTION OF THE DRAWINGS

Embodiments of this disclosure will be described hereinafter, by way of example only, with reference to the accompanying drawings in which like reference signs relate to like elements and in which:
Figure 1 shows a block diagram illustrating a computing device 100 according to an embodiment of this disclosure;
Figure 2 shows a flowchart illustrating a method 200 of providing a custom manifest for a content stream to a user electronic device according to an embodiment of this disclosure;
Figure 3 shows a block diagram illustrating the method 200 of providing a custom manifest for a content stream to a user electronic device according to an embodiment of this disclosure;
Figure 4 shows a flowchart illustrating a method 400 of sending a custom manifest according to an embodiment of this disclosure;
Figure 5 shows a block diagram illustrating the method 400 of sending a custom manifest according to an embodiment of this disclosure;
Figure 6 shows a flowchart illustrating a method 600 of updating a custom manifest for a content stream based on received updated client data according to an embodiment of this disclosure;
Figure 7a shows a block diagram illustrating a first aspect of the method 600 of updating a custom manifest for a content stream based on received updated client data according to an embodiment of this disclosure;
Figure 7b shows a block diagram illustrating a second aspect of the method 600 of updating a custom manifest for a content stream based on received updated client data according to an embodiment of this disclosure;
Figure 8 shows a flowchart illustrating a method 800 of requesting a custom manifest for a content stream from a sender device according to an embodiment of this disclosure;
Figure 9 shows a block diagram illustrating the method 800 of requesting a custom manifest for a content stream from a sender device according to an embodiment of this disclosure;
Figure 10 shows a flowchart illustrating a method 1000 of requesting an updated custom manifest according to an embodiment of this disclosure;
Figure 11 shows a block diagram illustrating the method 1000 of requesting an updated custom manifest according to an embodiment of this disclosure;

### DETAILED DESCRIPTION

Embodiments of this disclosure are described in the following with reference to the accompanying drawings.

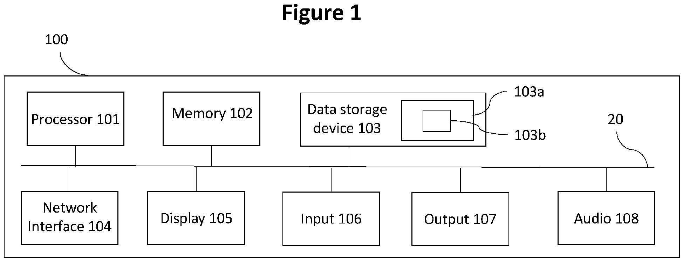

Figure 1 illustrates a block diagram of a computing device 100 that may form part of a user electronic device or a sender electronic device (herein referred to as the sender) according to an embodiment of the present disclosure. The sender may be a server, or a cloud computing system. The user electronic device(s) and/or sender(s) described herein may be any type of computing device, including but not limited to, a PC, laptop, tablet computer, mobile phone, television or smart TV, smart watch, and/or gaming console. It will be appreciated that the sender and each user electronic device may comprise a plurality of electronic devices operably in communication with each other.

Any wireless communication channels between the sender and the user electronic device(s) as discussed herein may be any type of wireless communication channel. For example, the sender may communicate with the user electronic device(s) via Wi-Fi^{®} or other wireless internet connection, NFC, Bluetooth^{®}, etc.

The computing device 100 is associated with executable instructions for causing the computing device 100 to perform any one or more of the methodologies discussed herein. In some embodiments, the computing device 100 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The computing device 100 includes a processing device 101, a memory 102, and a secondary memory (e.g., a data storage device 103), which communicate with each other via a bus 20. The memory may be read-only memory (ROM), flash memory, dynamic random-access memory (DRAM) such as synchronous DRAM (SDRAM) or Rambus DRAM (RDRAM), static random-access memory (SRAM), etc.

Processing device 101 represents one or more general-purpose processors such as a microprocessor, central processing unit, or the like. More particularly, the processing device 101 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 101 may also be one or more special-purpose processing devices such as an application specific integrated circuit (ASIC), a field programmable gate array (FPGA), a digital signal processor (DSP), network processor, or the like. Processing device 101 is configured to execute the processing logic (instructions 103b) for performing the operations and steps discussed herein.

The computing device 100 may further include a network interface device 104. The computing device 100 also may include a video display unit 105 (e.g., a liquid crystal display (LCD) or a cathode ray tube (CRT)), and an audio device 108 (e.g., a speaker). The computing device 100 may further include a data input 106 and a data output 107 to receive and send data to and from the computing device 100.

The data storage device 103 may include one or more machine-readable storage media (or more specifically one or more non-transitory computer-readable storage media) 103a on which is stored one or more sets of instructions 103b embodying any one or more of the methodologies or functions described herein. The instructions 103b may also reside, completely or at least partially, within the memory 102 and/or within the processing device 101 during execution thereof by the computer system 100, the memory 102 and the processing device 101 also constituting computer-readable storage media.

The various methods described above may be implemented by a computer program. The computer program may include computer code arranged to instruct a computer to perform the functions of one or more of the various methods described herein. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Current protocols for presenting streamed media to clients provides the same standard stream content for all viewers, offering a limited selection of content and configuration of that content. The content is mostly fixed during the entire streaming session and existing delivery protocols do not take into consideration the user's preferences and optimising the experience based on user electronic device capabilities. This means that many users will have a compromised or sub-optimum viewing experience.

It is an object of the present disclosure to improve the sending, output and updating of such content streams by providing a means of negotiation between a user electronic device and a sender to establish the best viewing experience for a user watching a streamed media presentation based upon their device capabilities and their preferences. This negotiation can work in a dynamic and ongoing capacity, as described in the following disclosure, such that the sender is always offering a tailored viewing experience, even as a user's capabilities, viewing device and/or preferences change during a streaming session.

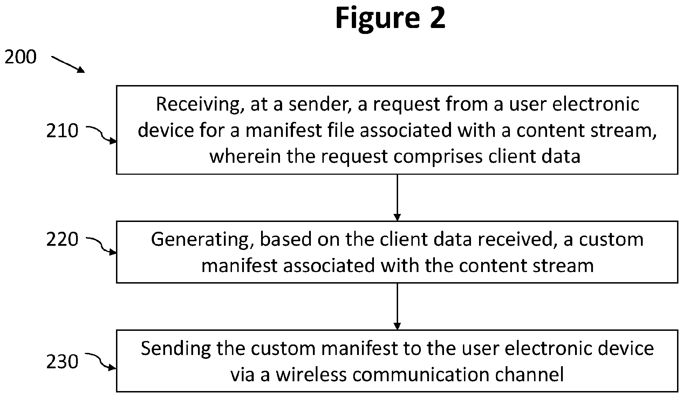

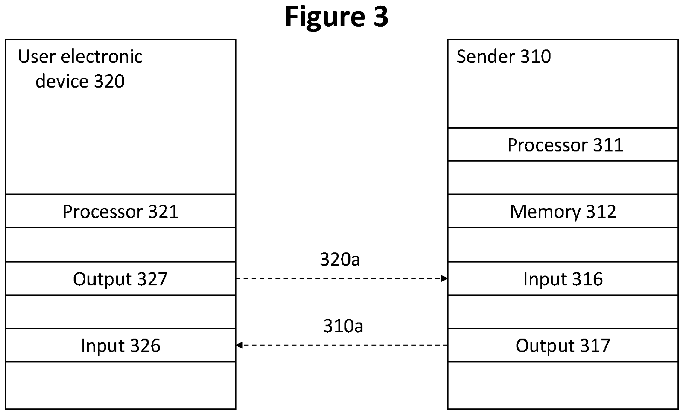

A method 200 of providing a custom manifest for a content stream to a user electronic device is illustrated in the flowchart in Figure 2. Figure 3 is a corresponding block diagram illustrating the method 200 and showing a sender 310 in communication with a user electronic device 320. As such, the method 200 is from the perspective of the sender 310.

At step 210, the method 200 includes receiving, at the sender 310, a request 320a from the user electronic device 320 for a manifest file associated with a content stream, wherein the request 320a comprises client data.

The request comprising client data may be referred to as "the request" throughout this disclosure for simplicity.

It will be appreciated that a manifest file defines the contents of a content stream (e.g. a video stream), such as the parameters and description of the video stream. Often, the manifest file will list all of the available versions of the video that are available to stream. The manifest file can contain the URIs and names for each version of the video stream. There are various manifest file formats that can be used, depending on the various streaming media protocols and requirements.

In some embodiments or examples, the sender 310 may receive the request 320a via the input 316 of the sender 310. The request 320a may be received by the sender 310 via a wireless communication channel. The sender 310 may store the received request 320a within a memory312 of the sender 310. The stored request 320a may be accessed at a later stage for processing.

In an embodiment, the client data may comprise device information identifying the user electronic device 320. The device information may comprise device specifications of the user electronic device 320. For example, the device specifications may include one or more of a device model number/name; display screen resolution and dimensions; display refresh rate; device processor information; display brightness and HDR capability; device video format information; and device audio capability. The device specifications are not limited to the above non-exhaustive list.

The user electronic device 320 may be one of multiple user electronic devices that are associated with the user. As such, in some embodiments, the client data may comprise device information identifying a plurality of user electronic devices, the plurality of user electronic devices (not shown) including the user electronic device 320. In a non-limiting example or embodiment, the client data may identify multiple devices possessed by the user, or within the same household. - The plurality of user electronic devices may include one or more of a mobile phone, TV, tablet, games console, desktop PC, etc. In this example, all of the user electronic devices may be described or identified in the request 320a as part of the client data.

In a further embodiment, the device information may comprise device specifications for two or more user electronic devices of the plurality of user electronic devices. In some embodiments, the client data may include device specifications of each of the plurality of user electronic devices. The device specifications may describe the capabilities of the plurality of user electronic devices in the user's possession. In an example, each of the user electronic devices owned by the user may have different specifications, or two or more of the devices may be the same device.

In some embodiments, the client data may include an indication of the status of the two or more user electronic devices of the plurality of user electronic devices. The indication of the status may provide an indication as to whether or not each user electronic device is turned on, or is in an active state, at the time of sending the request. The indication of the status may provide an indication of one or more properties of each electronic device at the time of sending the request (e.g. the current processing power, available memory, battery power, etc).

In an embodiment, the client data may further comprise at least one setting specified by the user. In an example, the at least one setting may be related to user preference such as spoken languages of the user, time limitations, or a maximum number of different video views which can be supported and shown on the screen of the user electronic device 320 at any one-time. Such preferences may also include accessibility preferences. In an example the user may have specific requirements for colour settings, audio description, reducing clutter of content shown on screen, among other needs. In some embodiments, the at least one setting may be content stream specific such as favourite players (for sporting events) of the user, or camera shot type (wide shots or closer to the action). The at least one setting is not limited to the above examples as will be understood by the present disclosure.

In a further embodiment, the least one setting may include a maximum duration for the personalised version of the content stream. For example, the user may be time-limited and may wish to view a content stream within that frame of time. In this example, the received request 320a may specify a maximum time duration of personalised version of the content stream (such as 30 minutes).

At step 220, the method 200 includes generating, based on the client data received, a custom manifest 310a associated with the content stream, wherein the custom manifest 310a defines a personalised version of the content stream.

A processing device 311 of the sender 310 may retrieve the request 320a comprising the client data from the memory 312. The processing device 311 may then process the request 320a to identify the specific requirements/restrictions of the user as outlined by the request 320a and the client data. The processing device 311 may then generate the custom manifest 310a based on the client data.

Continuing from the above example, the processing device 311 may retrieve the request 320a which specifies the maximum time duration set by the user. In this example, the request may specify, for instance, that the user only has 10 minutes to view the content stream, wherein the content stream may be a particular football match. The processing device 311 then processes the request 320a to identify that the specific requirements/restrictions of the user is indicative of the user only having 10 minutes to watch the particular football match. In response, the processing device 311 constructs a presentation (comprised of lots of short clips of highlights from the requested content stream), to fill the specified 10-minute time restriction (or as close as possible). The processing device 311 generates a custom manifest 310a which comprises of all the details required for the user electronic device 320 to stream the customised presentation.

In an embodiment, where the client data comprises device information identifying a plurality of user electronic devices, the method 200 further comprises generating a respective custom manifest for each of the plurality of user electronic devices.

Continuing from the above example, where the client data may specify that there are a plurality of devices associated with the user, or within the same household, the processing device 311 may generate a custom manifest 310a containing details of content for each of the plurality of devices. The sender 310 may store the respective custom manifests for each of the plurality of user electronic devices in the memory 312. Accordingly, if the user were to switch between two of the plurality of devices while watching the personalised content stream, the sender 310 would already have the respective custom manifest of the current user electronic device being used by the user pre-prepared and ready for the current user electronic device.

At step 230, the method 200 includes sending the custom manifest to the user electronic device via a wireless communication channel. The sender 310 may output the generated custom manifest 310a via an output 317 of the sender 310 to the user electronic device 320.

In some embodiments, where the client data comprises device information identifying a plurality of user electronic devices, and where the processing device 311 generates a respective custom manifest for each of the plurality of user electronic devices, the method 200 further comprises sending the respective custom manifests for each of the user electronic devices to the, or each, user electronic device. As such, if the user were to switch to a different one of the plurality of user electronic devices, the respective custom manifest for said user electronic device has already been received from the sender.

In an example, the sender 310, prior to step 210, may state what it can offer, at a high level, before receiving the request 320a from the user electronic device 320. For example, the sender 310 may indicate what content streams are available (such as genre), or what types of tailored viewing experiences are available (such as multiple camera angles for a specific content stream). A user may use this information and, via the user electronic device 310, send the request 320a based on the initial information provided by the sender 310. In this example, the request 320a may comprise a message from the user to request more details about some or all the offered content.

In a further example, the content stream is a video game (or any other content stream where there may be a single recipient). In this example, encoding resources may be saved because the sender 310 would not need to encode content that will not be consumed. Once the sender knows which resolutions are supported by the (or each) user electronic device (depending upon their device capabilities and network conditions) it would only need to create a range of representations which are suitable for said device(s) (via the respective custom manifests). For example, as the user moves location or removes a user electronic device from the plurality of user electronic devices available in the session (e.g. if the device battery is runs out or if the device is in use by somebody else), the server may reconfigure the range of content being encoded for the user accordingly.

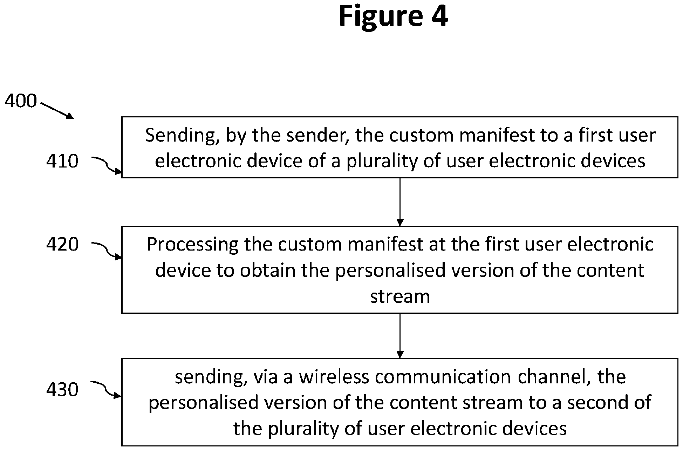

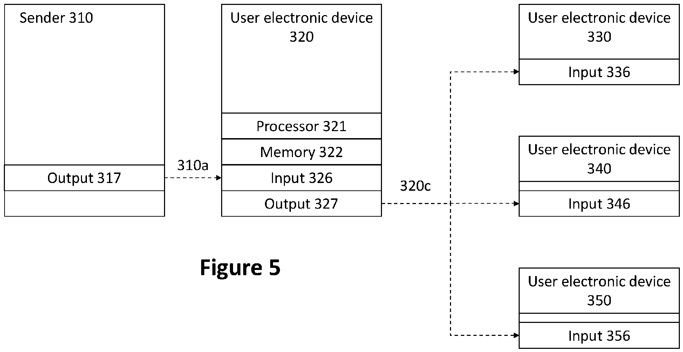

A method 400 of sending a custom manifest is illustrated in the flowchart in Figure 4. Figure 5 is a corresponding block diagram illustrating the method 400 and showing the sender 310 in communication with a first user electronic device 320.The first user electronic device 320 is in communication with further user electronic devices 330, 340, and 350.

At step 410, the method 400 includes sending the custom manifest 310a to the first user electronic device 320 of the plurality of user electronic devices 320-350. In an example, the sender 310 may send the custom manifest 310a to the first user electronic device 320 from the output 317 of the sender 310.

At step 420, the method 400 includes processing the custom manifest 310a at the first user electronic device 320 to obtain the personalised version of the content stream 320c.This processing step may include receiving and decoding the personalised version of the content stream 320c at the first user electronic device 320.

In an example, the user electronic device 320 may receive the custom manifest 310a via an input 326 of the user electronic device 320. Optionally, the custom manifest 310a may then be stored in a memory 322 of the user electronic device. Additionally, or alternatively, a processing device 321 of the user electronic device 320 may receive the custom manifest 310a. The processing device 321 processes the custom manifest 310a to decode and/or obtain all the details required for the user electronic device 320 to stream the personalised version of the content stream 320c from the custom manifest 310a.

At this stage, the first user electronic device 320 may output the (decoded) personalised content stream 320c on the first user electronic device 320 itself via a display on the device or the like (described in further detail below). Alternatively, the method 400 may proceed to step 430.

At step 430, the method 400 includes sending, via a wireless communication channel, the personalised version of the content stream 320c to a second of the plurality of user electronic devices 320-350.

Only four user electronic devices have been shown in Figure 5 for illustrative purposes. The present invention is not limited to four electronic devices, and any number of user electronic devices may be used depending on the number of user electronic devices owned by the user.

In an example, where there are multiple devices associated with the user (e.g., phones, TV, tablet, console, etc.), the user may wish to process the custom manifest 310a on a first of the plurality of user electronic devices (such as user electronic device 320), and then output the decoded or obtained personalised version of the content stream 320c via a second of the plurality of user electronic devices (such as user electronic devices 330-350). In this example, the sender 310 may send the custom manifest 310a to a user electronic device with the greatest processing capability for processing, or decoding, whilst the outputting of the personalised content stream 320c (which is less processor intensive) may be performed by another one of (or a plurality of) the user electronic devices associated with the user, for example the user's smart phone.

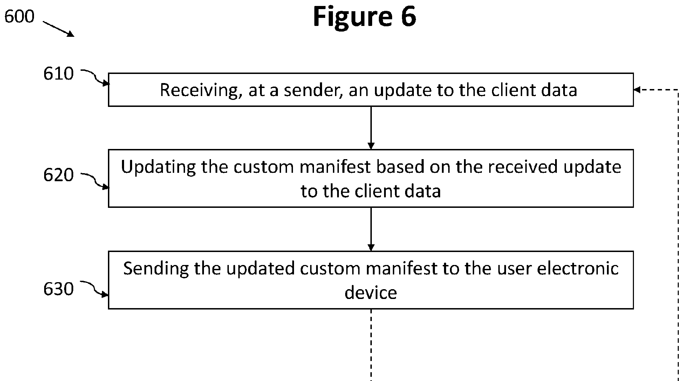

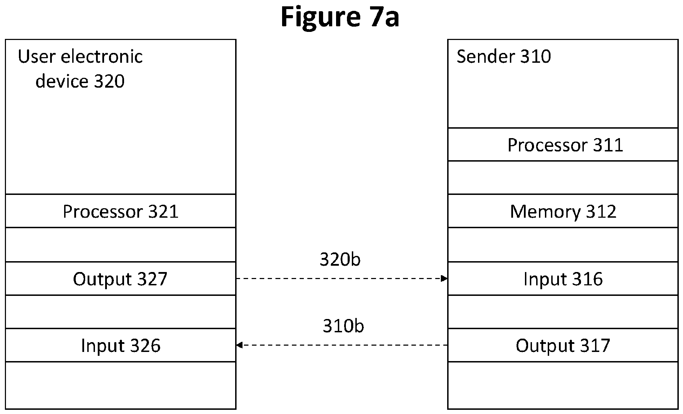

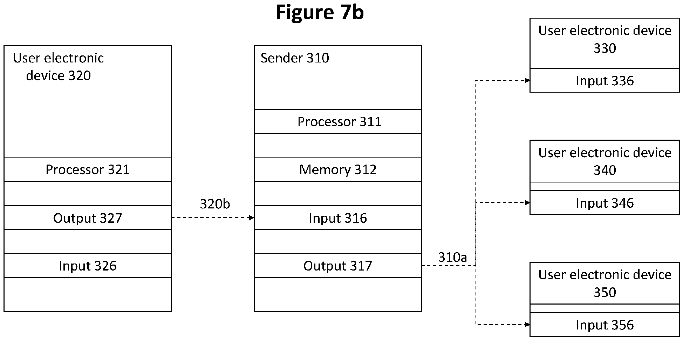

A method 600 of updating a custom manifest for a content stream from a sender is illustrated in the flowchart in Figure 6. Figures 7a and 7b are corresponding block diagrams illustrating the method 600 and showing the example sender 310 in communication with the example user electronic device. As will be described in further detail below, Figure 7b relates to an embodiment wherein an update to the client data (herein referred to as "the update") comprises a request to provide the content stream to a second user electronic device 330-350 of the plurality of user electronic devices.

At step 610, the method 600 includes receiving, at the sender 310, an update 320b to the client data.

The sender 310 may receive the update 320b via the input 316 of the sender 310. The update 320b may be received by the sender 310 via a wireless communication channel. The sender 310 may store the received update 320b within a memory 312 of the sender 310. The stored update 320b may be accessed at a later stage for processing.

In an example, the update 320b may comprise a change in the at least one setting specified by the user. The change may be in relation to, for example, a change in user preference such as spoken languages of the user, time limitations, or a maximum number of different video views which can be supported and shown on the screen of the user electronic device 320 at any one-time. Such preferences may also include accessibility preferences. In an example the user may require a change in the specific colour settings, audio description, and reducing clutter of content shown on screen, among other needs. In a further example, the change in the at least one setting may be content stream specific such as a change in favourite players (for sporting events) of the user, or camera shot type (wide shots or closer to the action). The change in the at least one setting is not limited to the above examples.

At step 620, the method 600 includes updating the custom manifest 310a based on the received update 320b to the client data.

In an example, the processing device 311 of the sender 310 may obtain the update 320b from the memory 312. The processing device 311 may then process the update 320b to identify the changes to the client data. The processing device 311 may then generate an updated custom manifest 310b based on the changes to the client data as outlined in the update 320b.

At step 630, the method 600 includes sending the updated custom manifest 310b to a user electronic device, wherein the updated custom manifest 310b defines an updated personalised version of the content stream.

In an embodiment, with reference to Figure 7a, the method 600 includes sending the updated custom manifest 310b back to the user electronic device 320. In an example, the sender 310 may output the updated custom manifest 310b via the output 317 of the sender 310 to the user electronic device 320.

In an embodiment, with reference to Figure 7a, sending, to the user electronic device 320, the updated custom manifest 310b comprises sending the differences between the updated custom manifest 310b and the custom manifest 310a. Advantageously, this reduces the amount of data to be transmitted, compared to sending to entire updated custom manifest 310b.

In an example, the request 320a as received by the sender 310 may comprise, for instance, a requirement to view two different camera angles of the content stream displayed side by side. The update 320b as received by the sender may comprise, for instance, adding a third camera angle to be displayed below the first two camera angles. In this example, the processing device 311 of the sender 310 may identify the difference between the request 320a and the update 320b (in this case the third camera angle), and generate an updated custom manifest 310b which constitutes all the details required for the user electronic device 320 to stream the update to the content stream. In this example, the sender 310 does not need to repeat the computation required to process the previous generated components of the custom manifest 310 (the first two camera angles side by side), and therefore would only be required to compute the change (the third camera angle added to the bottom of the first two camera angles). In some embodiments, only the data corresponding to the requested change may then be sent to the user electronic device 320.

Returning to step 620 of method 600, in a further embodiment, with reference to Figure 7b, the update 320b may comprise an indication that the user is wanting to switch from the user electronic device 320 to a second user electronic device 330-350. In this embodiment the processing device 311 of the sender 310 may obtain the requirements from the update 320b, and in response cause the custom manifest 310a to be sent to a second user electronic device 330-350 of the plurality of user electronic devices. In an example, the sender 310 may output the custom manifest 310a via the output 317 of the sender 310 to the second user electronic device 330-350.

In an example, the update 320b and the sending of the updated custom manifest 310b are part of an ongoing negotiation between the sender 310 and the plurality of user electronic devices 320-350. As part of the negotiation, the sender may receive a second update 320b (or further subsequent updates 320b) from any one of the plurality of user electronic devices 320-350. As such, once the updated custom manifest 310b is sent to the user electronic device 320 (as in Figure 7a), or the custom manifest 310a is sent to the second user electronic device 330-350 (as in Figure 7b), method 600 may return to step 610 after step 630.

For example, the user may wish to move to a new location and the network conditions may be unfavourable. In this example, there may be a re-negotiation of content to maintain the experience, whilst making concessions based on user/user electronic device preferences. For example, the bitrate, resolution, and audio quality may be changed to maintain a consistent experience. In a further example, the content view may also change to maintain a consistent experience.

For instance, the user may be watching a football match at home on a screen in 8k resolution. The user may then wish to move location and to continue watching the same content on their mobile phone. In turn, the sender 310 may provide a custom manifest 310b which contains all the details necessary to stream the same content stream (he football match), however the stream is renegotiated (or reformatted) such that a different view of the same football match is shown. For example, it may be a much narrower shot focusing on the ball and players near to or interacting with the ball and not the wide angle view that was being watched on the much larger screen at home.

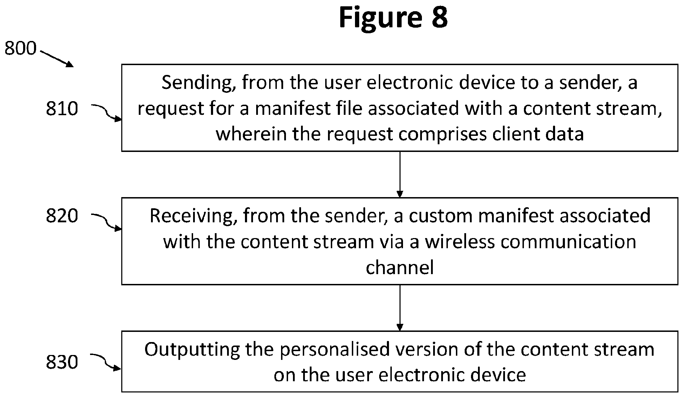

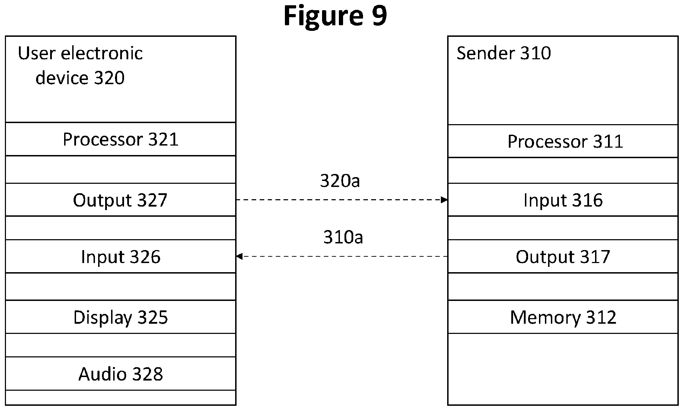

A method 800 of outputting a content stream on a user electronic device, the user electronic device comprising a display screen, is illustrated in the flowchart in Figure 8. Figure 9 is a corresponding block diagram illustrating the method 800 and showing the example user electronic device 320 in communication with an example sender 310. As such, the method 800 is from the perspective of the user electronic device 320.

At step 810, the method 800 includes sending, from the user electronic device 320 to the sender 310, a request 320a for a manifest file associated with a content stream, wherein the request comprises client data.

The user of the user electronic device 320 may wish to view a personalised version of a content stream, rather than a standard or generic version of the content stream offered to viewers. The user electronic device 320 may recognise that the user wishes to view the content stream and in response requests, via the request 320a, a manifest file associated with the content stream from the sender 310. The user electronic device 320 may send the request 320a via the output 327 of the user electronic device 320. The request 320a may be sent via a wireless communication channel.

In some embodiments, the client data may comprise device information identifying the user electronic device 320. The device information may comprise device specifications of the user electronic device 320. For example, the device specifications may include a device model number/name; display screen resolution and dimensions; display refresh rate; device processor information; display brightness and HDR capability; device video format information; and device audio capability. The device specifications are not limited to the above non-exhaustive list.

In some embodiments, the client data may comprise device information identifying a plurality of user electronic devices, the plurality of user electronic devices (not shown) including the user electronic device 320.

The device information may comprise device specifications for the plurality of user electronic devices. The device specifications may describe the capabilities of the plurality of user electronic devices associated with the user. In an example, each of the user electronic devices associated with the user may have different specifications, or two or more of the devices may be the same device.

In an example, the client data may further comprise at least one setting specified by the user. The at least one setting may be related to user preference such as spoken languages of the user, time limitations, or a maximum number of different video views which can be supported and shown on the screen of the user electronic device 320 at any one-time.

In a further example, the at least one setting may include accessibility preferences such as colour settings, audio description, reducing clutter of content shown on screen, among other needs.

In a further example, the at least one setting may be content stream specific such as favourite players (for sporting events) of the user, or camera shot type (wide shots or closer to the action).

In a further embodiment, the least one setting may include a maximum duration for the personalised version of the content stream.

The at least one setting is not limited to the above examples as will be understood by the present disclosure.

At step 820, the method 800 includes receiving, from the sender 310, a custom manifest 310a associated with the content stream via a wireless communication channel.

In an example, the user electronic device 310 may receive the custom manifest 310a via the input 326 of the user electronic device 320. The custom manifest 310a may be received via a wireless communication channel.

The custom manifest 310a comprises all the details required for the user electronic device 320 to stream a personalised version of the content stream. The personalised version of the content stream is generated by the sender 310 based on the request 320a. Thus, the personalised version of the content stream, and accordingly the custom manifest 310a, have been tailored to the user's requirements and/or preferences, as per the client data in the request. As such, in an embodiment, the personalised version of the content stream is unique to the user electronic device.

In an example, the custom manifest 310a may be stored in a memory 322 of the user electronic device 320. The custom manifest 310a may then be retrieved from the memory 322 at a later stage for processing. Additionally or alternatively, the custom manifest 310a, once received by the user electronic device 320, may be sent to a processing device 321 of the user electronic device 320. The processing device 321 may then process, which may include decoding, the custom manifest 310a to obtain all the data required for the user electronic device 320 to stream the personalised version of the content stream as defined in the custom manifest 310a.

At step 830, the method 800 includes outputting the personalised version of the content stream on the user electronic device 320.

In an example, once the processing device 321 has obtained the (decoded) personalised version of the content stream, the user electronic device 320 may output the personalised content stream. The user electronic device 320 may output a visual element of the content stream via a video display unit 325 of the user electronic device 320. Furthermore, the user electronic device 320 may output an auditory element of the content stream via an audio device 328 of the user electronic device 320.

In an example, the video display unit 325 and/or the audio device 328 may be separate devices to the user electronic device 320. In this example, the user electronic device 320 may be in communication, via wired or wireless communication, with the video display unit 325 and/or the audio device 328.

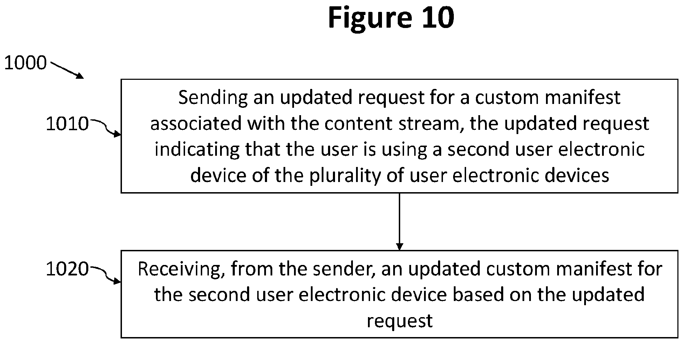

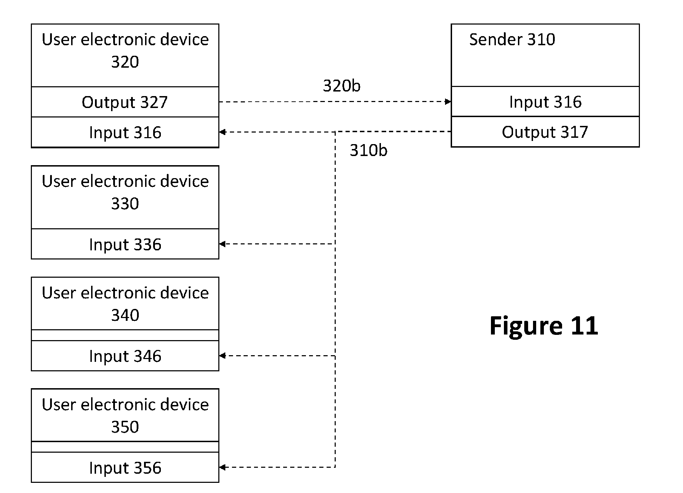

A method 1000 of requesting an updated custom manifest, is illustrated in the flowchart in Figure 10. Figure 11 is a corresponding block diagram illustrating the method 1000 and showing a first user electronic device 320, and further user electronic devices 330-350 in communication with a sender 310.

At step 1010, the method 1000 includes sending an updated request 320b (herein referred to as "the update") for a custom manifest associated with the content stream, the update 320b indicating that the user is using a second user electronic device 330-350 of the plurality of user electronic devices.

The user electronic device 320 may send the update 320b via the output 326 of the user electronic device 320. The update 320b may be sent via a wireless communication channel.

In this embodiment, the update 320b comprises an indication that the user is using a second user electronic device 330-350 of the plurality of user electronic devices. In this example, the update 320b may specify that there are multiple devices within the same household, or associated with the user- e.g., phones, TV, tablet, console, etc. In this embodiment, each of the plurality of electronic devices may be described in the update 320b as part of the client data within the update 320b.

Only four user electronic devices have been shown in Figure 11 for illustrative purposes. The present invention is not limited to four electronic devices, and any number of user electronic devices may be provided depending on the number of user electronic devices associated with the user.

At step 1020, the method 1000 includes receiving, from the sender 310, an updated custom manifest 310b for the second user electronic device 330-350 based on the update 320b.

In an example, in response to sending the update 320b indicating that the user is using a second user electronic device 330-350, the user electronic device may receive, via the input 316, an updated custom manifest 310b for the second user electronic device 330-350.

In an example, the updated custom manifest 310b comprises all the details required for the second user electronic device 330-350 to stream the personalised version of the content stream.

In an example, the updated custom manifest 310b for the second user electronic device 330-350 may be received by the first user electronic device 320. In this example, the updated custom manifest 310b for the second user electronic device 330-350 may be sent to the second user electronic device 330-350, via a wireless communication channel, by the first user electronic device 320 at a later stage.

In an embodiment, step 1020 of the method 1000 may further include receiving, a collection of updated custom manifests 310b including a respective updated custom manifest for each of the plurality of user electronic devices. In this embodiment, the sender 310, based on the update 320b, may generate an updated custom manifest 310b for each of the plurality of user electronic devices 320-350 as indicated by the user and send, via the output 317, the updated custom manifest 310b to each user electronic device 320-350. Each user electronic device 320-350 may then select its respective updated custom manifest 310b from the collection sent by the sender 310.

In an example, with reference to steps 810 and 820 of method 800, in response to sending a request for a manifest file associated with a content stream from a user electronic device to a sender, the sender may send a collection of custom manifest files to each of the plurality of user electronic devices. Once received, each user electronic device may select its respective custom manifest.

In a further example, in a content stream consisting of multiple different video feeds which the user electronic device 310 needs to composite onto a single display, a user might opt for one of the videos to be shown in higher resolution. To enable this, the user electronic device 310 may request a custom manifest that provides a larger representation for the selected video, at the cost of detail in other smaller/less prominent feeds (for example where limited network speed and/or limited decoding resources are available on the device).

Accordingly, there has been described a method of providing a custom manifest for a content stream to a user electronic device, the method comprising receiving a request for a manifest file, generating a custom manifest, wherein the custom manifest defines a personalised version of the content stream, and sending the custom manifest to the user electronic device. The method further comprises providing an updated custom manifest file based on a received updated request. There has also been described a method of outputting a content stream on a user electronic device, the method comprising sending a request for a manifest file, receiving a custom manifest file, and outputting a personalised version of the content stream as defined in the custom manifest file. The method further comprises sending un updated request for a custom manifest associated with the content stream, and receiving an updated custom manifest.

Although particular embodiments of this disclosure have been described, it will be appreciated that many modifications/additions and/or substitutions may be made within the scope of the claims.

## Claims

1. A method of providing a custom manifest for a content stream to a user electronic device, the method comprising:
receiving, at a sender, a request from a user electronic device for a manifest file associated with a content stream, wherein the request comprises client data;
generating, based on the client data received, a custom manifest associated with the content stream, wherein the custom manifest defines a personalised version of the content stream; and
sending the custom manifest to the user electronic device via a wireless communication channel.

2. The method of claim 1, wherein the client data comprises a device specification for the user electronic device, the device specification including information defining one or more of: device type; at least one audio requirement of the user electronic device; at least one visual requirement of the user electronic device; at least one data processing capability of the user electronic device; a display screen size of the user electronic device; and/or one or more properties of the wireless communication channel.

3. The method of claim 1 or claim 2, wherein the client data comprises device information identifying a plurality of user electronic devices, the plurality of user electronic devices including the user electronic device.

4. The method of claim 3, wherein the method further comprises generating a respective custom manifest for each of the plurality of user electronic devices.

5. The method of claim 4, wherein sending the custom manifest to the user electronic device comprises sending the respective custom manifest for the user electronic device.

6. The method of any one of claims 3-5, wherein sending the custom manifest further comprises:
sending the custom manifest to a first user electronic device of the plurality of user electronic devices; and
wherein the method further comprises:
processing the custom manifest at the first user electronic device to obtain the personalised version of the content stream;
sending, via a wireless communication channel, the personalised version of the content stream to a second user electronic device of the plurality of user electronic devices.

7. The method of any preceding claim, wherein the client data further comprises at least one setting specified by the user or the user electronic device, wherein the least one setting includes a maximum duration for the personalised version of the content stream.

8. The method of any preceding claim, further comprising:
receiving, at the sender, an update to the client data;
updating the custom manifest based on the received update to the client data; and
sending the updated custom manifest to the user electronic device, wherein the updated custom manifest defines an updated personalised version of the content stream.

9. The method of claim 8, wherein sending, to the user electronic device, the updated custom manifest comprises sending any differences between the updated custom manifest and the custom manifest.

10. The method of claim 8 or claim 9, wherein the client data comprises device information identifying a plurality of user electronic devices, the plurality of user electronic devices including the user electronic device, and
wherein the update to the client data comprises a request to provide the content stream to a second user electronic device of the plurality of user electronic devices.

11. A method of outputting a content stream on a user electronic device, the user electronic device comprising a display screen, the method comprising:
sending, from the user electronic device to a sender, a request for a manifest file associated with a content stream, wherein the request comprises client data;
receiving, from the sender, a custom manifest associated with the content stream via a wireless communication channel, wherein the custom manifest is based on the client data and defines a personalised version of the content stream;
outputting the personalised version of the content stream on the user electronic device.

12. The method of claim 11, wherein the client data comprises device information identifying a plurality of user electronic devices, the plurality of user electronic devices including the user electronic device and wherein the method further comprises:
sending an updated request for a custom manifest associated with the content stream, the updated request indicating that the user is using a second user electronic device of the plurality of user electronic devices; and
receiving, from the sender, an updated custom manifest for the second user electronic device based on the updated request.

13. The method of claim 12, further comprising receiving, from the sender, a collection of custom manifests including a respective custom manifest for each of the plurality of user electronic devices, and wherein the second user electronic device selects its respective custom manifest from the collection.

14. A sender electronic device comprising:
a processor; and
memory including executable instructions that, as a result of execution by the processor, cause the sender electronic device to perform the computer-implemented method of any of claims 1 to 10.

15. A user electronic device, comprising:
a display screen;
a processor; and
memory including executable instructions that, as a result of execution by the processor, cause the user electronic device to perform the computer-implemented method of any of claims 11 to 13.
